# EUROPEAN PATENT SPECIFICATION

(11) **EP 2 702 507 B1**
(45) Date of publication and mention of the grant of the patent: **04.12.2019**
(21) Application number: 12721021.9
(22) Date of filing: 11.04.2012
(51) Int. Cl.: G06F 16/23

(54) **SELECTIVE LOCKING OF OBJECT DATA ELEMENTS**
SELEKTIVE VERRIEGELUNG VON OBJEKTDATENELEMENTEN
VERROUILLAGE SÉLECTIF D'ÉLÉMENTS DE DONNÉES D'OBJET

(30) Priority: 29.04.2011 US 201161480822 P; 28.09.2011 US 201113246940
(43) Date of publication of application: 05.03.2014
(73) Proprietor: Siemens Product Lifecycle Management Software Inc., Plano, TX 75024 (US)
(72) Inventor: IYER, Niranjan K., San Diego, CA 92130 (US); INSKO, Matthew J., Milford, OH 45150 (US); HAYDEN, Robert, Dallas, TX 75214 (US)
(74) Representative: Maier, Daniel Oliver
(86) International application number: PCT/US2012/033075
(87) International publication number: WO 2012/148677

(56) References cited:
- US-A- 5 202 971
- US-A- 5 418 966
- US-A1- 2005 203 718
- US-A1- 2007 156 688
- US-A1- 2007 185 872
- US-A1- 2007 282 966
- US-B2- 7 849 401

## Description

This invention relates to a method, a product data management das processing system and a computer-readable medium for a selective locking of object data elements according to the independent claims.

### TECHNICAL FIELD

The present disclosure is directed, in general, to computer-aided design, visualization, and manufacturing systems ("CAD systems"), product lifecycle management ("PLM") systems, project and schedule management systems, and systems that manage data for products and other items (individually and collectively, product data management ("PDM") systems).

### BACKGROUND

PDM systems can aid users in creating and managing project schedules, among other functions, including the scheduling of tasks. PDM systems also maintain schedules, tasks, and other data objects that may occasionally be edited by different processes. US 2007/0185871 A1 deals with managing locks of resources in a database.

### SUMMARY OF THE DISCLOSURE

The object of the invention is solved by the features of the independent claims. Further embodiments are the subject-matter of the dependent claims. Various disclosed embodiments relate to systems and methods for selective data locking and editing with particular utility in schedule management functions, and in particular in PDM systems configured to perform processes as described herein.

Various embodiments include PDM systems, methods, and mediums. A method includes receiving a lock request for data of a specified type. The method includes processing the lock request in response to the lock request, including locking the data of the specified type for a plurality of data objects in response to the lock request. The method includes receiving at least one change to data of the specified type for at least one of the plurality of data objects. The method includes updating and saving the at least one of the plurality of objects according to the received change by changing the data of the specified type. of the plurality of data objects. The method includes updating and saving the at least one of the plurality of objects according to the received change by changing the data of the specified type.

The foregoing has outlined rather broadly the features and technical advantages of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiment disclosed as a basis for modifying or designing other structures for carrying out the same purposes of the present disclosure.

Before undertaking the DETAILED DESCRIPTION below, it may be advantageous to set forth definitions of certain words or phrases used throughout this patent document: the terms "include" and "comprise," as well as derivatives thereof, mean inclusion without limitation; the term "or" is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely. Definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments.

### BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects, and in which:
Figure 1 depicts a block diagram of a data processing system in which an embodiment can be implemented in accordance with disclosed embodiments;
Figures 2-5 depict flowcharts of processes in accordance with disclosed embodiments; and
Figure 6 depicts a simplified block diagram of an example of concurrent updating in accordance with disclosed embodiments.

### DETAILED DESCRIPTION

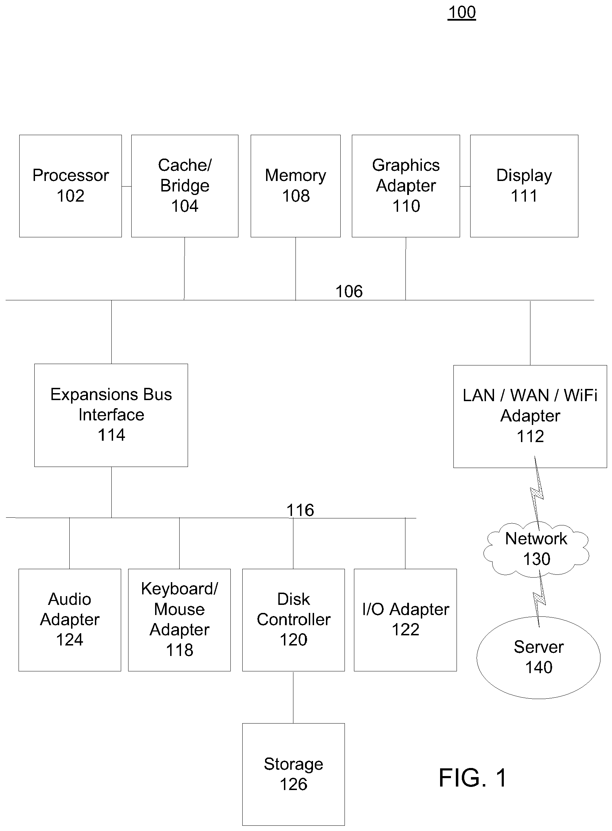

Figures 1 through 5, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device. The numerous innovative teachings of the present application will be described with reference to exemplary non-limiting embodiments.

Project management systems and other PDM systems have a high level of interdependencies. Tasks are dependent on resource availability and the completion of other tasks. A minor change can cause a "ripple" of changes which cascade across multiple objects in a schedule. In a collaborative system, each of these changes must be persisted to enforce data integrity and allow concurrency, among other reasons. Because of the ripple effect, making multiple minor changes can cause the same fields to change multiple times, causing excessive network and database traffic. The traffic is considered excessive because only the final value is important and any intermediate values are not needed.

If the entire project is locked, the system will not support concurrency. There is not currently a way to lock fields on objects based on certain conceptual or logical boundaries, as opposed to physical boundaries, while allowing concurrent updates to the same object. Disclosed embodiments allow selective and intelligent locking instead of holistic locking.

To preserve data integrity, it is important to lock fields to prevent data corruption. This methodology allows simultaneous access to one type of data and single user access to another type of data and for the reduction of network or database traffic while maintaining data integrity and system concurrency. In a project management system, it may be that only one schedule owner/planner modifies the plan, but potentially hundreds of users would need to update their task status and execution data in parallel.

Disclosed embodiments include improved systems and methods for checking and locking various scheduling functions.

Figure 1 depicts a block diagram of a data processing system in which an embodiment can be implemented, including as a PDM system particularly configured to perform processes as described herein. The data processing system depicted includes a processor 102 connected to a level two cache/bridge 104, which is connected in turn to a local system bus 106. Local system bus 106 may be, for example, a peripheral component interconnect (PCI) architecture bus. Also connected to local system bus in the depicted example are a main memory 108 and a graphics adapter 110. The graphics adapter 110 may be connected to display 111.

Other peripherals, such as local area network (LAN) / Wide Area Network / Wireless (e.g. WiFi) adapter 112, may also be connected to local system bus 106. Expansion bus interface 114 connects local system bus 106 to input/output (I/O) bus 116. I/O bus 116 is connected to keyboard/mouse adapter 118, disk controller 120, and I/O adapter 122. Disk controller 120 can be connected to a storage 126, which can be any suitable machine usable or machine readable storage medium, including but not limited to nonvolatile, hard-coded type mediums such as read only memories (ROMs) or erasable, electrically programmable read only memories (EEPROMs), magnetic tape storage, and user-recordable type mediums such as floppy disks, hard disk drives and compact disk read only memories (CD-ROMs) or digital versatile disks (DVDs), and other known optical, electrical, or magnetic storage devices.

Also connected to I/O bus 116 in the example shown is audio adapter 124, to which speakers (not shown) may be connected for playing sounds. Keyboard/mouse adapter 118 provides a connection for a pointing device (not shown), such as a mouse, trackball, trackpointer, etc.

Those of ordinary skill in the art will appreciate that the hardware depicted in Figure 1 may vary for particular implementations. For example, other peripheral devices, such as an optical disk drive and the like, also may be used in addition or in place of the hardware depicted. The depicted example is provided for the purpose of explanation only and is not meant to imply architectural limitations with respect to the present disclosure.

A data processing system in accordance with an embodiment of the present disclosure includes an operating system employing a graphical user interface. The operating system permits multiple display windows to be presented in the graphical user interface simultaneously, with each display window providing an interface to a different application or to a different instance of the same application. A cursor in the graphical user interface may be manipulated by a user through the pointing device. The position of the cursor may be changed and/or an event, such as clicking a mouse button, generated to actuate a desired response.

One of various commercial operating systems, such as a version of Microsoft Windows™, a product of Microsoft Corporation located in Redmond, Wash. may be employed if suitably modified. The operating system is modified or created in accordance with the present disclosure as described.

LAN/ WAN/Wireless adapter 112 can be connected to a network 130 (not a part of data processing system 100), which can be any public or private data processing system network or combination of networks, as known to those of skill in the art, including the Internet. Data processing system 100 can communicate over network 130 with server system 140, which is also not part of data processing system 100, but can be implemented, for example, as a separate data processing system 100.

Various embodiments include systems and methods for checking and locking functional areas, instead of physical attributes, and utilizing these processes to reduce network and database traffic.

Broadly described, when an application on a PDM system application attempts to update data of type (x) on object (y), the system will request a lock specific for that type and only allow the lock if type (x) is not already locked for that object. For example, this allows concurrent updates to all types (x) which are not on that same object (y) by a different user (z).

In various embodiments, the objects (y) are tasks in a schedule management system, implemented in a PDM system, and the tasks include information of different types (x). In a scheduling embodiment, the types can include schedule data, task scheduling data, assignments, dependencies, Schedule and Task deliverables, Task costing information, Task Execution Information, schedule membership, notifications, calendars, or otherwise.

By keeping the lock open, intermediate updates are not required to be sent to the server to enforce data integrity. The processes disclosed herein can include a deferred updating of data on a server after the editing is completed and the lock is released.

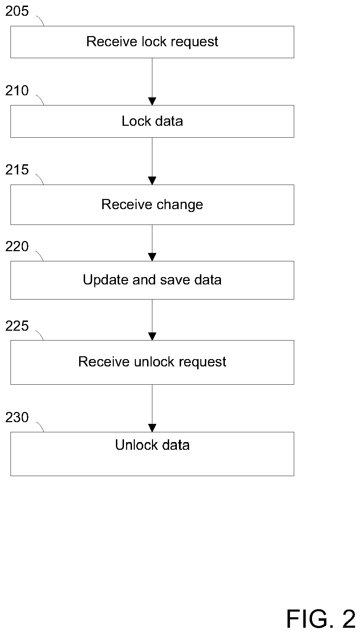

Fig. 2 depicts a flowchart of a process in accordance with disclosed embodiments that can be performed by one or more PDM systems 100, for rapid data editing with selective locking. This process can use the disclosed type-based lock to make large bulk changes on type (x) data.

The system receives a lock request for data of a specified type (step 205). "Receiving", as used herein, can include loading from storage, receiving from another system or process, receiving via an interaction with a user, and otherwise. This can be an explicit lock request or an implicit lock request, as described herein.

In response to the lock request, the system processes the lock request, which in at least some cases includes locking the data of the specified type for a plurality of data objects (step 210).

The system receives at least one change to data of the specified type for at least one of the plurality of data objects (step 215). Of course, in some cases, there may be no change, and this step is omitted.

The system updates and saves the data objects according to the received change by changing the data of the specified type (step 220). In some cases, multiple objects are all updated with changes to the data of the specified type; this can include, but is not limited to, making the same updates to multiple objects according to the received change. If there were no changes, the data objects need not be updated and saved, and this step could be omitted.

The system can receive an explicit unlock request for the data of the specified type (step 225).

In response to the unlock request, the system processes the unlock request, which in at least some cases includes unlocking the data of the specified type for the plurality of data objects (step 230).

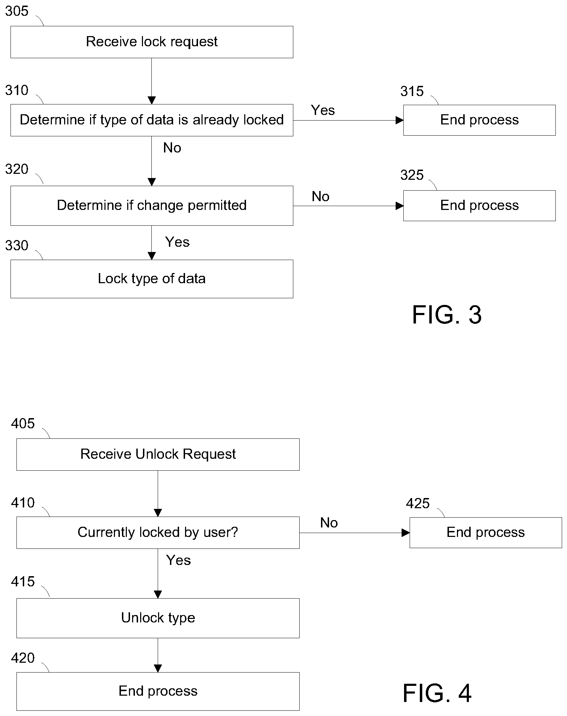

Fig. 3 depicts a flowchart of a process in accordance with disclosed embodiments, that can be performed by one or more PDM systems 100, for processing an explicit lock request.

The system receives an explicit lock request for data of a specified type (step 305). The request can be received from a user. For purposes of this example, the request is to lock a data type (x) in an object (y) and is made by a user (z).

The system determines if the data of the specific type is already locked for that object (step 310). This step can also include determining if the data of the specific type is already locked for that object by the user making the request. In this example, the system determines if data type (x) in object (y) is already locked by user (z).

If it is already locked, the process ends (step 315), since the requested lock already exists. This step can include returning a response that the type is already locked by the user making the request, when that is the case, or can include returning an error when the type is already locked by a different user.

The system determines if a change corresponding to the request is permitted (step 320). This can include determining if the requesting user (z) is permitted to make a change to type (x) in object (y).

If not, the process ends (at step 325). This step can include returning an error. If the change is permitted, the system locks the data type (x) in the object (y) according to the request (step 330). In various embodiments, other data types in the object are not locked.

Fig. 4 depicts a flowchart of a process in accordance with disclosed embodiments, that can be performed by one or more PDM systems 100, for processing an explicit unlock request.

The system receives an explicit unlock request for data of a specified type (step 405). The request can be received from a user. For purposes of this example, the request is to unlock a data type (x) in an object (y) and is made by a user (z).

The system determines if the data of the specific type is currently locked for that object (step 410). This step can also include determining if the data of the specific type is already locked for that object by the user making the request. In this example, the system determines if data type (x) in object (y) is already locked by user (z). This can be performed at once for all objects (y).

If it is already locked by that user, the system unlocks the type in the object (step 415). The process then ends (step 420). This can be performed at once for all objects (y).

If the data of the specific type is not already locked for that object by the user making the request, the process ends (step 425). This step can include returning an error that the user is not permitted to unlock that type for that object.

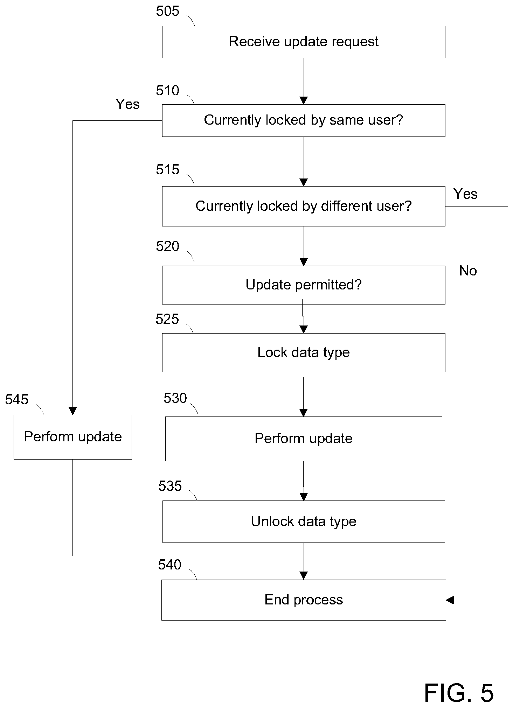

Fig. 5 depicts a flowchart of a process in accordance with disclosed embodiments, that can be performed by one or more PDM systems 100 for processing an implicit lock request.

The system receives a request to update data of a specified type for an object (step 505). The request can be received from a user. For purposes of this example, the request is to update data of type (x) in an object (y) and is made by a user (z).

The system determines if the data of the specific type is already locked for that object (step 510). This step can also include determining if the data of the specific type is already locked for that object by the user making the request. In this example, the system determines if data type (x) in object (y) is already locked by user (z). This can be performed at once for all objects (y).

If it is already locked for that user, the system processes the requested update (step 545) and the process ends (step 540). This can be performed at once for all objects (y). Note that if the data type was already locked for that user, then it is not automatically unlocked after the update. In such cases, the processes described at steps 515-535 can be skipped or omitted.

The system determines if the type and that object is currently locked by a different user (step 515). If so, the process ends (step 540). This step can include returning an error or other response to the user.

The system determines if the requested update is permitted (step 520). This can include determining if the requesting user (z) is permitted to make a change to type (x) in object (y).

If not, the process ends (at step 540). This step can include returning an error.

If the change is permitted, the system locks the data type (x) in the object (y) according to the request (step 525). The system processes the requested update (step 530). Steps 530 and 545 can be performed in the same way, and are separated here for clarity.

The system can then unlock that data type (x) in the object (y) (step 535), and the process ends (step 540). This can be performed at once for all objects (y).

In various embodiments, when a lock is applied on data of a specified type, then only those parts are locked to the user and disallowed for other users while the other data types in the plurality of objects are still allowed to be updated. That is, data of a different type for the plurality of objects can be updated by other processes or users while the data of the specified type is locked.

The various processes used herein can be used on a single system for rapidly updating various data, and can be used by multiple PDM systems together, in particular to allow multiple systems and their users to simultaneously update any data type that is not currently locked.

In many applications, different types of updates affect different parts of persisted objects. The processes described herein allows for the maintenance of data integrity while allowing concurrent updates to different areas of the object based on logical instead of physical boundaries.

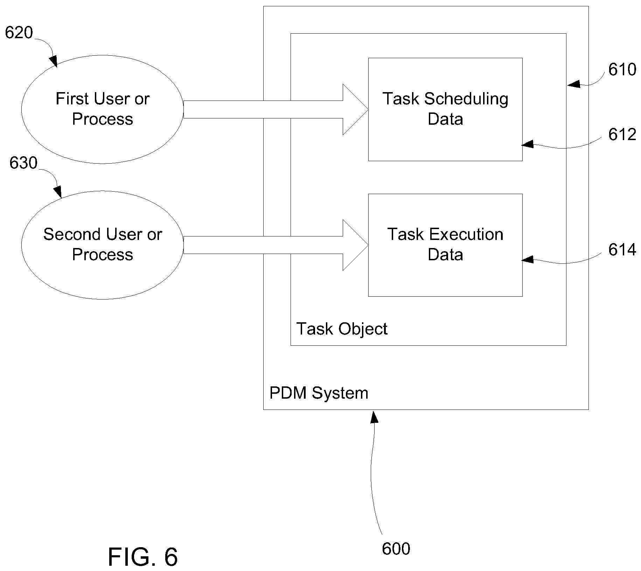

Figure 6 depicts a simplified block diagram of an example of concurrent updating using techniques as disclosed herein, in an exemplary scheduling context.

In this figure, a PDM system 600 maintains and stores a task object 610. Task object 610 includes two types of data, task scheduling data 612 and task execution data 614. Task scheduling and execution data are non-limiting examples, and the processes described herein also apply to other types of data.

A first process or user 620, such as the coordinator of a schedule, can request a lock on specific data types, such as task scheduling data 612 on the task object 610. That allows the first user 620 to get exclusive rights to the task scheduling data 612.

At the same time, a second user or process 630, such as an assigned user with lower permissions, is allowed to update task execution data 614 on the same task object 610, since only the task scheduling data 612 is locked by the first user 620. Note that first user 620 and second user 630 can each be on the same or different systems than PDM system 600, and can each be local or remote from PDM system 600.

As used herein, an "Object" refers to data object being checked. This can be a representation of a physical object or a collective group of objects or otherwise. "Type" refers to the type of updates being made. A single object can have multiple independent types of updates. "Holistic Locking" refers to a lock applied to the entire object (or collection of objects).

Unless otherwise described, the various processes, actions, and steps described above can be performed concurrently, sequentially, in a different order, or omitted in various embodiments.

Those skilled in the art will recognize that, for simplicity and clarity, the full structure and operation of all data processing systems suitable for use with the present disclosure is not being depicted or described herein. Instead, only so much of a data processing system as is unique to the present disclosure or necessary for an understanding of the present disclosure is depicted and described. The remainder of the construction and operation of data processing system 100 may conform to any of the various current implementations and practices known in the art.

It is important to note that while the disclosure includes a description in the context of a fully functional system, those skilled in the art will appreciate that at least portions of the mechanism of the present disclosure are capable of being distributed in the form of instructions contained within a machine-usable, computer-usable, or computer-readable medium in any of a variety of forms, and that the present disclosure applies equally regardless of the particular type of instruction or signal bearing medium or storage medium utilized to actually carry out the distribution. Examples of machine usable/readable or computer usable/readable mediums include: nonvolatile, hard-coded type mediums such as read only memories (ROMs) or erasable, electrically programmable read only memories (EEPROMs), and user-recordable type mediums such as floppy disks, hard disk drives and compact disk read only memories (CD-ROMs) or digital versatile disks (DVDs).

### List of used reference numerals, glossary

- 100: data processing system, PDM system
- 102: processor
- 104: cache/bridge, level two cache/bridge
- 106: local system bus
- 108: main memory
- 110: graphics adapter
- 111: display
- 112: Local Area Network / Wide Area Network / Wireless adapter
- 114: expansion bus interface
- 116: input/output bus; I/O bus
- 118: keyboard/mouse adapter
- 120: disk controller
- 122: I/O adapter
- 124: audio adapter
- 126: storage
- 130: network
- 140: server system

- 205: receiving a lock request for data of a specified type
- 210: locking the data of the specified type for a plurality of data objects
- 215: optionally: receiving at least one change to data of the specified type
- 220: updating and saving the data objects according to the received change
- 225: receiving an explicit unlock request for the data of the specified type
- 230: processing the lock request in response to the unlock request

- 305: receiving a lock request for data of a specified type
- 310: determining if the data of the specific type is already locked for that object
- 315: if already locked the process ends
- 320: determining if a change corresponding to the request ispermitted
- 325: if not permitted the process ends
- 330: if permitted locking the data type in the object according to the request

- 405: receiving an explicit unlock request for data of a specified type
- 410: determining it the data of the specific type is currently locked
- 415: if already locked by that user, unlocking the type in the object
- 420: process ends
- 425: if the data of the specific type is not already locked for that object by the user making the request, process ends
- 505: receiving an request for updating data of a specified type for an object
- 510: determining it the data of the specific type is already locked for that object by the same user
- 515: determining if the type of that object is currently locked by a different user
- 520: if yes in step 515 determining if the requested update is permitted
- 525: if yes in step 520 locking the data type in the object according to the request
- 530: processing the requested update
- 535: unlocking said data type in the object
- 545: if the data of a specified type is already locked for that users, processing the requested update

- 600: PDM system
- 610: task object
- 612: task scheduling data
- 614: task execution data
- 620: first user, first process
- 630: second user, second process

- CAD: computer-aided design
- PCI: peripheral component interconnect
- PDM: product data management
- PLM: product lifecycle management
- y: object
- x: type of object
- z: user

## Claims

1. A method performed by a product data management (PDM) data processing system, comprising:
receiving a lock request (205, 305, 405) for data of a specified type (x);
processing the lock request in response to the lock request (205, 305, 405), including locking (210) the data of the specified type (x) for a plurality of data objects (y) in response to the lock request (205), wherein said data objects (y, 610) are tasks in a schedule management system, said tasks including data of different types (x, 612,614);
receiving (215) at least one change to data of the specified type (x) for at least one of the plurality of data objects (y); and
updating and saving (220) the at least one of the plurality of objects (y) according to the received change by changing the data of the specified type (x);
wherein
when a lock is applied on data of a specified type (x, 612) by a process or user (620), only those data (x, 612) are locked to said user (620) and disallowed for other users (630), while the other data types (x, 614) in the plurality of objects (y, 610) are still allowed to be updated, so that data of a different type (x, 614) for the plurality of objects (y, 610) can be updated by other processes or users (630) while the data of the specified type (x, 612) are locked.

2. The method of claim 1, wherein processing the lock request (305) includes determining (310) if the data of the specific type (x) is already locked for the at least one of the plurality of data objects (y).

3. The method of claim 1 or claim 2, wherein processing the lock request (305) includes determining (320) if a change corresponding to the request (305) is permitted.

4. The method of one of the claims 1 to 3, wherein the PDM data processing system (600) also receives (505) an explicit unlock request for the data of the specified type (x) and in response to the unlock request, processes the unlock request including unlocking (535) the data of the specified type (x) for a plurality of data objects (y) .

5. The method of claim 4, wherein the unlock request (510) corresponds to a user (z), and processing the unlock request (510) includes determining (515) if the data of the specific type (x) is currently locked for the object (y) and the user (z).

6. The method of one of the claims 1 to 5, wherein a plurality of the objects (y) are each updated according to the change to the data of the specified type (x).

7. A product data management (PDM) data processing system (100, 600), comprising:
at least one processor (102); and
an accessible memory (108, 126), wherein the PDM data processing system (100, 600) is configured to:
receive (205, 305, 405) a lock request for data of a specified type (x);
process the lock request in response to the lock request, including locking (210) the data of the specified type (x) for a plurality of data objects (y) in response to the lock request (205), wherein said data objects (y, 610) are tasks in a schedule management system, said tasks including data of different types (x, 612,614);
receive (215) at least one change to data of the specified type(x) for at least one of the plurality of data objects (y); and
update and saving (220) the at least one of the plurality of objects (y) according to the received change by changing the data of the specified type (x) wherein when a lock is applied on data of a specified type (x, 612) by a process or user (620), only those data (x, 612) are locked to said user (620) and disallowed for other users (630), while the other data types (x, 614) in the plurality of objects (y, 610) are still allowed to be updated, so that data of a different type (x, 614) for the plurality of objects (y, 610) can be updated by other processes or users (630) while the data of the specified type (x, 612) are locked.

8. The PDM data processing system of claim 7, wherein processing the lock request (305) includes determining if the data of the specific type (x) is already locked for the at least one of the plurality of data objects (y).

9. The PDM data processing system of claim 7 or claim 8, wherein processing the lock request (305) includes determining (320) if a change corresponding to the request (305) is permitted.

10. The PDM data processing system of one of the claims 7 to 9, wherein the PDM data processing (600) system also receives (505) an explicit unlock request for the data of the specified type (x) and in response to the unlock request, processes the unlock request including unlocking (535) the data of the specified type (x) for a plurality of data objects (y).

11. The PDM data processing system of claim 10, wherein the unlock request (510) corresponds to a user (z), and processing the unlock request (510) includes determining (515) if the data of the specific type (x) is currently locked for the object and the user (z).

12. The PDM data processing system of one of the claims 7 to 11, wherein a plurality of the objects (y) are each updated according to the change to the data of the specified type (x).

13. A non-transitory computer-readable medium encoded with executable instructions that, when executed, cause a product data management (PDM) data processing system (100, 600) to perform all the steps of the method according to one of claims 1 to 6.

## Patentansprüche

1. Verfahren, das von einem Produktdatenmanagement-(PDM-)Datenverarbeitungssystem ausgeführt wird und Folgendes umfasst:
Empfangen einer Sperranfrage (205, 305, 405) für Daten eines vorgegebenen Typs (x),
Verarbeiten der Sperranfrage als Reaktion auf die Sperranfrage (205, 305, 405), was das Sperren (210) der Daten des vorgegebenen Typs (x) für mehrere Datenobjekte (y) als Reaktion auf die Sperranfrage (205) umfasst, wobei es sich bei den Datenobjekten (y, 610) um Aufgaben in einem Terminmanagementsystem handelt, die Daten verschiedenen Typs (x, 612, 614) enthalten,
Empfangen (215) mindestens einer Änderung an Daten des vorgegebenen Typs (x) für mindestens eines der mehreren Datenobjekte (y) und
Aktualisieren und Speichern (220) des mindestens einen der mehreren Objekte (y) entsprechend der empfangenen Änderung durch Ändern der Daten des vorgegebenen Typs (x),
wobei,
wenn für Daten eines vorgegebenen Typs (x, 612) durch einen Prozess oder Benutzer (620) eine Sperre eingerichtet worden ist, nur diese Daten (x, 612) für diesen Benutzer (620) gesperrt und für andere Benutzer (630) unzulässig sind, während sich die anderen Datentypen (x, 614) in den mehreren Objekten (y, 610) weiterhin aktualisieren lassen, so dass Daten eines anderen Typs (x, 614) für die mehreren Objekte (y, 610) durch andere Prozesse oder Benutzer (630) aktualisiert werden können, während die Daten des vorgegebenen Typs (x, 612) gesperrt sind.

2. Verfahren nach Anspruch 1, wobei das Verarbeiten der Sperranfrage (305) das Ermitteln (310) umfasst, ob die Daten des bestimmten Typs (x) für das mindestens eine der mehreren Datenobjekte (y) bereits gesperrt sind.

3. Verfahren nach Anspruch 1 oder 2, wobei das Verarbeiten der Sperranfrage (305) das Ermitteln (320) umfasst, ob eine der Anfrage (305) entsprechende Änderung zulässig ist.

4. Verfahren nach einem der Ansprüche 1 bis 3, wobei das PDM-Datenverarbeitungssystem (600) auch eine ausdrückliche Freigabeanfrage für die Daten des vorgegebenen Typs (x) empfängt (505) und die Freigabeanfrage als Reaktion auf die Freigabeanfrage verarbeitet, was das Freigeben (535) der Daten des vorgegebenen Typs (x) für mehrere Datenobjekte (y) umfasst.

5. Verfahren nach Anspruch 4, wobei die Freigabeanfrage (510) einem Benutzer (z) entspricht und das Verarbeiten der Freigabeanfrage (510) das Ermitteln (515) umfasst, ob die Daten des bestimmten Typs (x) derzeit für das Objekt (y) und den Benutzer (z) gesperrt sind.

6. Verfahren nach einem der Ansprüche 1 bis 5, wobei mehrere der Objekte (y) jeweils der Änderung an den Daten des vorgegebenen Typs (x) entsprechend aktualisiert werden.

7. Produktdatenmanagement-(PDM-)Datenverarbeitungssystem (100, 600), das Folgendes umfasst:
mindestens einen Prozessor (102) und
einen zugänglichen Speicher (108, 126), wobei das PDM-Datenverarbeitungssystem (100, 600) so konfiguriert ist, dass es:
eine Sperranfrage für Daten eines vorgegebenen Typs (x) empfängt (205, 305, 405),
die Sperranfrage als Reaktion auf die Sperranfrage verarbeitet, was das Sperren (210) der Daten des vorgegebenen Typs (x) für mehrere Datenobjekte (y) als Reaktion auf die Sperranfrage (205) umfasst, wobei es sich bei den Datenobjekten (y, 610) um Aufgaben in einem Terminmanagementsystem handelt, die Daten verschiedenen Typs (x, 612, 614) enthalten,
mindestens eine Änderung an Daten des vorgegebenen Typs (x) für mindestens eines der mehreren Datenobjekte (y) empfängt (215) und
das mindestens eine der mehreren Objekte (y) entsprechend der empfangenen Änderung durch Ändern der Daten des vorgegebenen Typs (x) aktualisiert und speichert (220), wobei, wenn für Daten eines vorgegebenen Typs (x, 612) durch einen Prozess oder Benutzer (620) eine Sperre eingerichtet worden ist, nur diese Daten (x, 612) für diesen Benutzer (620) gesperrt und für andere Benutzer (630) unzulässig sind, während sich die anderen Datentypen (x, 614) in den mehreren Objekten (y, 610) weiterhin aktualisieren lassen, so dass Daten eines anderen Typs (x, 614) für die mehreren Objekte (y, 610) durch andere Prozesse oder Benutzer (630) aktualisiert werden können, während die Daten des vorgegebenen Typs (x, 612) gesperrt sind.

8. PDM-Datenverarbeitungssystem nach Anspruch 7, wobei das Verarbeiten der Sperranfrage (305) das Ermitteln umfasst, ob die Daten des bestimmten Typs (x) für das mindestens eine der mehreren Datenobjekte (y) bereits gesperrt sind.

9. PDM-Datenverarbeitungssystem nach Anspruch 7 oder 8, wobei das Verarbeiten der Sperranfrage (305) das Ermitteln (320) umfasst, ob eine der Anfrage (305) entsprechende Änderung zulässig ist.

10. PDM-Datenverarbeitungssystem nach einem der Ansprüche 7 bis 9, wobei das PDM-Datenverarbeitungssystem (600) auch eine ausdrückliche Freigabeanfrage für die Daten des vorgegebenen Typs (x) empfängt (505) und die Freigabeanfrage als Reaktion auf die Freigabeanfrage verarbeitet, was das Freigeben (535) der Daten des vorgegebenen Typs (x) für mehrere Datenobjekte (y) umfasst.

11. PDM-Datenverarbeitungssystem nach Anspruch 10, wobei die Freigabeanfrage (510) einem Benutzer (z) entspricht und das Verarbeiten der Freigabeanfrage (510) das Ermitteln (515) umfasst, ob die Daten des bestimmten Typs (x) derzeit für das Objekt und den Benutzer (z) gesperrt sind.

12. PDM-Datenverarbeitungssystem nach einem der Ansprüche 7 bis 11, wobei mehrere der Objekte (y) jeweils der Änderung an den Daten des vorgegebenen Typs (x) entsprechend aktualisiert werden.

13. Nichtflüchtiges, computerlesbares Medium, das mit ausführbaren Anweisungen codiert ist, die, wenn sie ausgeführt werden, ein Produktdatenmanagement-(PDM-)Datenverarbeitungssystem (100, 600) dazu veranlassen, alle Schritte des Verfahrens nach einem der Ansprüche 1 bis 6 durchzuführen.

## Revendications

1. Procédé réalisé par un système de traitement de données de gestion de données de produit (PDM), comprenant :
la réception d'une requête de verrouillage (205, 305, 405) pour des données d'un type spécifié (x) ;
le traitement de la requête de verrouillage en réponse à la requête de verrouillage (205, 305, 405), incluant le verrouillage (210) des données du type spécifié (x) pour une pluralité d'objets de données (y) en réponse à la requête de verrouillage (205), dans lequel lesdits objets de données (y, 610) sont des tâches dans un système de gestion de planification, lesdites tâches incluant des données de différents types (x, 612, 614) ;
la réception (215) d'au moins une modification à apporter à des données du type spécifié (x) pour au moins l'un de la pluralité d'objets de données (y) ; et
la mise à jour et la sauvegarde (220) de l'au moins un de la pluralité d'objets de données (y) conformément à la modification reçue en modifiant les données du type spécifié (x) ; dans lequel :
lorsqu'un verrouillage est appliqué sur des données d'un type spécifié (x, 612) par un processus ou par un utilisateur (620), seulement ces données (x, 612) sont verrouillées par rapport audit utilisateur (620) et sont interdites pour d'autres utilisateurs (630), tandis que les autres types de données (x, 614) dans la pluralité d'objets de données (y, 610) bénéficient toujours d'une autorisation de mise à jour, de sorte que des données d'un type différent (x, 614) pour la pluralité d'objets de données (y, 610) peuvent être mises à jour par d'autres processus ou par d'autres utilisateurs (630) tandis que les données du type spécifié (x, 612) sont verrouillées.

2. Procédé selon la revendication 1, dans lequel le traitement de la requête de verrouillage (305) inclut la détermination (310) de si les données du type spécifié (x) sont déjà verrouillées pour l'au moins un de la pluralité d'objets de données (y).

3. Procédé selon la revendication 1 ou la revendication 2, dans lequel le traitement de la requête de verrouillage (305) inclut la détermination (320) de si une modification qui correspond à la requête (305) est autorisée.

4. Procédé selon l'une des revendications 1 à 3, dans lequel le système de traitement de données de PDM (600) reçoit également (505) une requête de déverrouillage explicite pour les données du type spécifié (x) et, en réponse à la requête de déverrouillage, il traite la requête de déverrouillage, incluant le déverrouillage (535) des données du type spécifié (x) pour une pluralité d'objets de données (y).

5. Procédé selon la revendication 4, dans lequel la requête de déverrouillage (510) correspond à un utilisateur (z), et le traitement de la requête de déverrouillage (510) inclut la détermination (515) de si les données du type spécifié (x) sont présentement verrouillées pour l'objet de données (y) et pour l'utilisateur (z).

6. Procédé selon l'une des revendications 1 à 5, dans lequel les objets d'une pluralité des objets de données (y) sont chacun mis à jour conformément à la modification à apporter aux données du type spécifié (x).

7. Système de traitement de données de gestion de données de produit (PDM) (100, 600), comprenant :
au moins un processeur (102) ; et
une mémoire accessible (108, 126), dans lequel le système de traitement de données de PDM (100, 600) est configuré de manière à ce qu'il réalise les actions qui suivent :
la réception (205, 305, 405) d'une requête de verrouillage pour des données d'un type spécifié (x) ;
le traitement de la requête de verrouillage en réponse à la requête de verrouillage, incluant le verrouillage (210) des données du type spécifié (x) pour une pluralité d'objets de données (y) en réponse à la requête de verrouillage (205), dans lequel lesdits objets de données (y, 610) sont des tâches dans un système de gestion de planification, lesdites tâches incluant des données de différents types (x, 612, 614) ;
la réception (215) d'au moins une modification à apporter à des données du type spécifié (x) pour au moins l'un de la pluralité d'objets de données (y) ; et
la mise à jour et la sauvegarde (220) de l'au moins un de la pluralité d'objets de données (y) conformément à la modification reçue en modifiant les données du type spécifié (x) ; dans lequel :
lorsqu'un verrouillage est appliqué sur des données d'un type spécifié (x, 612) par un processus ou par un utilisateur (620), seulement ces données (x, 612) sont verrouillées par rapport audit utilisateur (620) et sont interdites pour d'autres utilisateurs (630), tandis que les autres types de données (x, 614) dans la pluralité d'objets de données (y, 610) bénéficient toujours d'une autorisation de mise à jour, de sorte que des données d'un type différent (x, 614) pour la pluralité d'objets de données (y, 610) peuvent être mises à jour par d'autres processus ou par d'autres utilisateurs (630) tandis que les données du type spécifié (x, 612) sont verrouillées.

8. Système de traitement de données de PDM selon la revendication 7, dans lequel le traitement de la requête de verrouillage (305) inclut la détermination de si les données du type spécifié (x) sont déjà verrouillées pour l'au moins un de la pluralité d'objets de données (y).

9. Système de traitement de données de PDM selon la revendication 7 ou la revendication 8, dans lequel le traitement de la requête de verrouillage (305) inclut la détermination (320) de si une modification qui correspond à la requête (305) est autorisée.

10. Système de traitement de données de PDM selon l'une des revendications 7 à 9, dans lequel le système de traitement de données de PDM (600) reçoit également (505) une requête de déverrouillage explicite pour les données du type spécifié (x) et, en réponse à la requête de déverrouillage, il traite la requête de déverrouillage, incluant le déverrouillage (535) des données du type spécifié (x) pour une pluralité d'objets de données (y).

11. Système de traitement de données de PDM selon la revendication 10, dans lequel la requête de déverrouillage (510) correspond à un utilisateur (z), et le traitement de la requête de déverrouillage (510) inclut la détermination (515) de si les données du type spécifié (x) sont présentement verrouillées pour l'objet de données et pour l'utilisateur (z).

12. Système de traitement de données de PDM selon l'une des revendications 7 à 11, dans lequel les objets d'une pluralité des objets de données (y) sont chacun mis à jour conformément à la modification à apporter aux données du type spécifié (x).

13. Support non transitoire pouvant être lu par un ordinateur et codé à l'aide d'instructions pouvant être exécutées qui, lorsqu'elles sont exécutées, forcent un système de traitement de données de gestion de données de produit (PDM) (100, 600) à réaliser toutes les étapes du procédé selon l'une des revendications 1 à 6.
